# FASCICULE DE BREVET EUROPEEN

(11) **EP 2 278 691 B1**
(45) Date de publication et mention de la délivrance du brevet: **25.01.2017**
(21) Numéro de dépôt: 10169213.5
(22) Date de dépôt: 12.07.2010
(51) Int. Cl.: H02K 7/09, H02K 9/08, F16C 32/06, F16C 32/04, F16C 39/06, F16C 35/00, H02K 5/10, H02K 5/12, H02K 5/22, H02K 9/00

(54) **Machine tournante pressurisée à raccordements hermétiques**
DRUCKHALTENDE DREHENDE MASCHINE MIT HERMETISCHEN ANSCHLÜSSEN
PRESSURISED ROTATING MACHINE WITH HERMETIC CONNECTIONS

(30) Priorité: 24.07.2009 FR 0955220
(43) Date de publication de la demande: 26.01.2011
(73) Titulaire: SKF MAGNETIC MECHATRONICS, 27950 Saint-Marcel (FR)
(72) Inventeur: Baudelocque, Luc, 27200 Vernon (FR)
(74) Mandataire: David, Alain

(56) Documents cités:
- EP-A1- 0 580 201
- EP-A2- 0 875 685
- WO-A1-99/42731

## Description

### Domaine de l'invention

La présente invention a pour objet une machine pressurisée équipée d'un rotor en contact avec une atmosphère gazeuse ou liquide corrosive, acide ou porteuse de particules et concerne plus particulièrement une machine tournante pressurisée équipée de paliers magnétiques chemisés, de détecteurs chemisés pour paliers magnétiques et/ou d'un moteur électrique chemisé.

### Art antérieur

Les paliers magnétiques chemisés sont généralement utilisés dans des machines tournantes pressurisées, communément en ambiance de gaz haute pression. Un palier magnétique chemisé est constitué pour une partie statorique de noyaux bobinés placés dans une enceinte de protection métallique constituée d'une armature, d'une chemise fine et d'un passage hermétique, et rempli d'un produit de remplissage pouvant servir d'appui à la chemise fine.

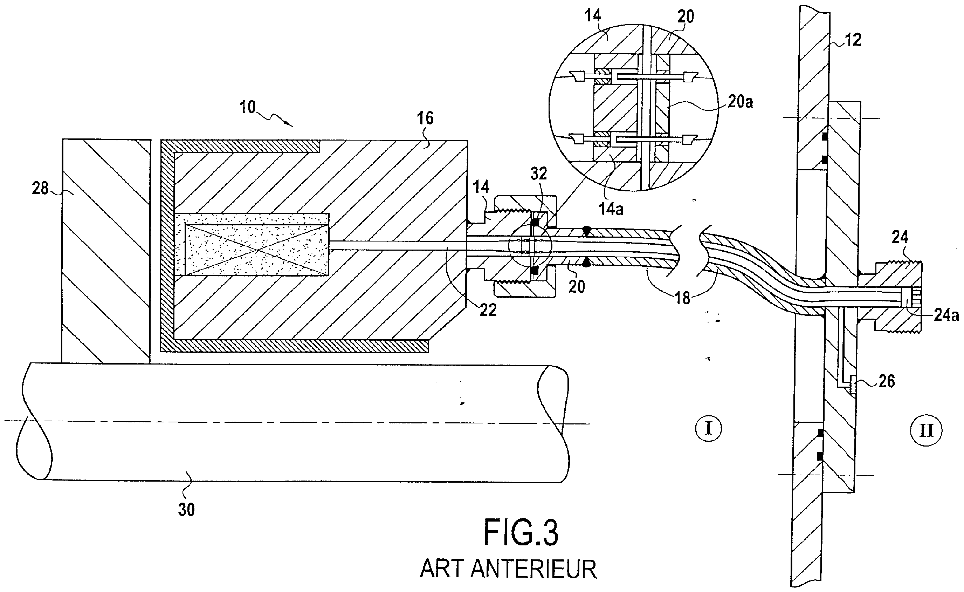

On a représenté sur la figure 3 un exemple de palier magnétique chemisé 10 placé à l'intérieur d'une machine 12 contenant du gaz sous pression. Une embase de connexion 14 équipée d'une traversée hermétique ou étanche 14a est installée sur une enceinte de protection métallique 16 du palier magnétique chemisé 10 afin de sortir les liaisons électriques. Un conduit flexible 18 muni à une extrémité d'un connecteur 20 équipé également d'une traversée hermétique ou étanche 20a permet de connecter les liaisons électriques 22 du palier magnétique chemisé 10 à l'extérieur de la machine par une nouvelle embase 24 munie d'une traversée hermétique ou étanche 24a.

Comme le montre la loupe de cette figure, ces traversées hermétiques sont généralement des passages conducteurs sertis sur une paroi métallique au moyen de perles de verre afin de constituer soit une embase de connexion, soit une fiche mobile de connecteur ou simplement un passage électrique étanche. L'ensemble est alors soudé ou fixé hermétiquement sur la paroi par joints, soudure, etc...

Afin de ne pas s'écraser sous la pression du gaz ambiant, le conduit flexible est rempli d'huile ou tout autre liquide de telle sorte que la pression interne du conduit soit très peu différente de la pression de gaz régnant dans la machine. De même, le conduit est suffisamment flexible pour être compatible avec l'expansion thermique du liquide. Un accès communicant 26 avec l'extérieur de la machine peut permettre le remplissage en liquide du conduit flexible.

L'espace entre les deux traversées hermétiques 14a et 20a est laissé en communication avec le gaz présent dans la machine si la qualité du gaz est compatible avec la nature des contacts électriques, soit hermétiquement clos si le gaz présente un risque pour ces contacts.

L'inconvénient d'un tel montage est de présenter des différences de pression importantes entre les milieux gazeux en présence et donc d'être très sensible à la qualité des taux de fuite de chacune des barrières d'herméticité.

Ainsi, il est très difficile de réaliser des traversées 14a, 20a de l'embase de connexion 14 du palier magnétique et du connecteur 20 du conduit flexible 18 qui aient d'excellent taux de fuite, c'est-à-dire meilleurs que 1E-8 mbar.l/s (taux mesuré sous hélium à 1 bar relatif), tout comme il est très difficile de réaliser de manière fiable des embases de connexion et connecteurs hermétiques ayant des taux de fuite de cet ordre. Les ordres de grandeur standards des taux de fuite de ces embases sont en effet typiquement de l'ordre de 1E-6 mbar.l/s. Des fabrications très soignées ou un tri lors de la fabrication permettent d'obtenir des taux de fuites des traversées hermétique de l'ordre voulu (< 10E-8 mbar.l/s). Mais ces composants sont excessivement fragiles tant au montage qu'à la longévité et de coût très élevé. De plus lorsque l'enceinte du palier magnétique chemisé doit être équipée de plusieurs traversées, le taux de fuite global est la somme des taux de fuite. Les opérations de montage (soudure des fils à l'arrière de la traversée, soudure de la traversée sur l'enceinte de protection, etc ...) sollicitent par des contraintes thermiques ou mécaniques les perles de verres qui perdent alors une partie de leur qualité. Le taux de fuite original s'en trouve alors altéré.

Il s'ensuit qu'il existe via les fuites résiduelles des migrations du gaz ambiant existant à l'intérieur de la machine jusqu'à l'intérieur du palier magnétique ou de l'ensemble chemisé au travers des différentes liaisons. Ces fuites en s'accumulant sont susceptibles de créer un milieu dangereux (corrosif, explosif, nocif, polluant, etc... ) ou nuisible à la longévité de l'ensemble chemisé. En cas de dépressurisation de la machine, la pression interne de l'ensemble chemisé peut alors être supérieure à la pression ambiante, ce qui se traduit alors par un gonflement de l'enceinte au niveau de la chemise fine pouvant aller jusqu'à la destruction de la chemise fine, soit par déformation plastique, soit par contact avec les armatures rotoriques 28 du rotor 30 comme dans le cas du palier magnétique axial chemisé illustré à la figure 3. Ceci est d'autant plus dangereux que le gaz est corrosif car le palier peut alors être aussi détruit par corrosion.

Typiquement, la pression à l'intérieur du palier chemisé est de l'ordre d'un bar absolu (pression de fabrication du palier chemisé) alors que la pression de gaz à l'intérieur de la machine peut être de 100 à 200 bar.

A cette pression, même si l'espace entre les deux traversées 14a et 20a est isolé par des joints d'étanchéité 32, la pression du gaz y apparaît rapidement au travers du taux de fuite de ces joints. Par la suite, la traversée hermétique 14a de l'embase de connexion 14 du palier magnétique chemisé 10 est soumise à une pression différentielle de gaz sensiblement égale à la pression de la machine. Si cette traversée ne possède pas un taux de fuite excellent (bien meilleur que 1E-8 mbar.l/s), la pression à l'intérieur du palier magnétique chemisé augmente ce qui peut aboutir à sa destruction comme explicité précédemment.

### Définition et objet de l'invention

La présente invention vise à remédier aux inconvénients précités et en particulier à limiter le taux de fuite des traversées hermétiques de sorte que aucune migration de gaz ne soit à craindre à l'intérieur du palier magnétique ou de l'ensemble chemisé.

Ces buts sont atteints, conformément à l'invention, par une machine tournante pressurisée comportant un ensemble chemisé dont les liaisons électriques sont reliées à l'extérieur de ladite machine par un conduit d'alimentation électrique, le passage desdites liaisons électriques dudit ensemble chemisé vers l'extérieur via ledit conduit d'alimentation électrique étant effectué en traversant successivement des première, deuxième et troisième traversées hermétiques, caractérisée en ce qu'aucune desdites traversées hermétiques permettant le passage desdites liaisons électriques n'est exposée à un gaz sous pression.

Ainsi, en empêchant chacune des traversées hermétiques de subir une présence de pression de gaz importante sur l'une de ses faces, la migration de gaz n'est plus possible et l'étanchéité de la liaison est préservée. Le volume de gaz passant au travers des différents joints d'étanchéité de la liaison (qui peuvent alors avoir un taux de fuite standard de l'ordre de 1E-6 mbar.l/s) est alors négligeable. Une surpression de liquide sur l'une des faces n'est pas dangereuse car un taux de fuite standard de l'ordre de 1E-6 mbar.l/s sous hélium n'autorise pas le passage du liquide.

Selon le mode de réalisation envisagé, ledit conduit d'alimentation électrique peut être un conduit rigide ou bien un conduit flexible.

Avantageusement, ledit conduit d'alimentation électrique est rempli d'un liquide de remplissage pour maintenir une pression interne au dit conduit d'alimentation électrique identique à la pression interne à la machine. Ledit liquide de remplissage peut être un isolant diélectrique.

Un ballon de compensation de pression peut être ajouté pour maintenir une pression interne au dit conduit d'alimentation électrique identique à la pression interne à la machine

De préférence, une valve est placée ou un perçage au travers de ladite deuxième traversée hermétique afin que la pression externe appliquée à ladite première traversée hermétique soit créée par ledit liquide de remplissage.

L'invention s'applique aussi bien à un palier magnétique chemisé, qu'à un détecteur chemisé pour palier magnétique ou à un moteur électrique chemisé. Le milieu extérieur à la machine peut être liquide.

### Brève description des dessins

D'autres caractéristiques et avantages de l'invention ressortiront à la lecture de la description suivante de modes particuliers de réalisation de l'invention, donnés à titre d'exemples, en référence aux dessins annexés sur lesquels :
- la figure 1 est une vue schématique d'un premier mode de réalisation des liaisons électriques reliant un palier magnétique chemisé à la paroi externe d'une machine tournante selon l'invention,
- la figure 2 est une vue schématique d'un second mode de réalisation des liaisons électriques reliant un palier magnétique chemisé à la paroi externe d'une machine tournante selon l'invention, et
- la figure 3 est une vue schématique des liaisons électriques reliant un palier magnétique chemisé à la paroi externe d'une machine tournante selon l'art antérieur.

### Description détaillée de modes de réalisation

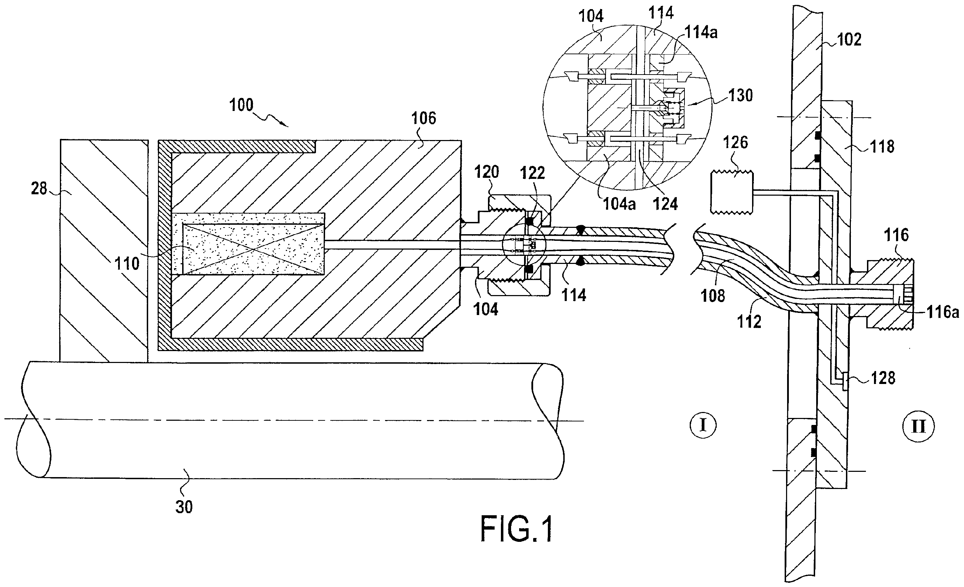

La figure 1 illustre un premier exemple, conforme à l'invention, de l'amenée à l'extérieur de la liaison électrique d'un palier magnétique chemisé 100 placé à l'intérieur d'une machine 102 contenant du gaz sous pression (les références cerclées I et II montrent respectivement l'intérieur et l'extérieur de la machine). Comme le montre plus en détail la loupe de cette figure, une embase de connexion 104 équipée d'une traversée hermétique ou étanche 104a est installée sur une enceinte de protection métallique 106 du palier magnétique chemisé 100, afin de sortir les liaisons électriques 108 nécessaires à l'alimentation des bobinages 110 du palier magnétique chemisé. Un conduit flexible 112 muni à une extrémité d'un connecteur 114 équipé également d'une traversée hermétique ou étanche 114a permet de relier les liaisons électriques 108 à un connecteur (non représenté) extérieur à la machine par une embase de connexion 116 de son autre extrémité munie également d'une traversée hermétique ou étanche 116a et montée sur une plaque de fermeture 118 de cette machine. La liaison mécanique entre l'embase de connexion 104 et le connecteur 114 est réalisée par un écrou 120 qui en outre permet la compression d'un joint d'isolation 122 placé à l'interface de ces deux éléments et assurant l'isolation de l'espace 124 compris entre les deux traversées hermétiques 104a et 114a.

Le conduit flexible 112 est rempli d'huile ou tout autre liquide de telle sorte que sa pression interne soit très peu différente de la pression de gaz régnant dans la machine et il est suffisamment flexible pour être compatible avec l'expansion thermique du liquide. De préférence, un ballon de compensation de pression 126 est installé sur la plaque de fermeture 118 qui comporte également un orifice 128 de communication avec l'extérieur de la machine pour permettre le remplissage en liquide du conduit flexible 112.

Selon l'invention, la traversée 114a est rendue perméable au liquide circulant dans le conduit flexible 112 de sorte que le liquide remplit l'espace libre 124 présent entre les traversées 104a et 114a. Ce liquide de remplissage peut être un isolant diélectrique.

La pression du liquide étant très sensiblement égale à la pression du gaz à l'intérieur de la machine grâce à la flexibilité du conduit 112 et/ou du ballon de compensation de pression 126, le joint d'étanchéité 122 voit d'un coté du gaz, de l'autre coté du liquide avec une différence de pression très faible n'autorisant pas le gaz à migrer à dans l'espace libre 124.

D'autre part la pression de part et d'autre de la traversée 104a est d'un côté une haute pression de liquide venant du conduit flexible 112, de l'autre côté la pression interne du palier chemisé, typiquement égale à 1bar. Une traversée de fabrication standard (taux de fuite sous hélium de 1E-6 mbar.l/s) est donc complètement hermétique au liquide et aucune migration n'est à craindre à l'intérieur du palier magnétique chemisé.

Dans le premier exemple de réalisation illustré à la figure 1, le connecteur 114 comporte, par exemple en son centre, une valve 130 dont l'ouverture, au moment ou les deux éléments 104 et 114 sont assemblés, met en communication le volume interne du conduit 112 et l'espace 124 entre les traversées 104a et 114a.

Lorsque le conduit flexible est connecté sur l'embase de connexion 104 du palier magnétique chemisé, une petite quantité de liquide vient remplir l'espace 124 entre la traversée hermétique de l'embase située sur le palier magnétique chemisé et la traversée du connecteur du conduit flexible. Le ballon de compensation de pression 126 peut aider à égaliser la pression interne du conduit avec la pression ambiante. Ce ballon n'est nécessaire que si le conduit flexible n'est pas suffisamment souple (voire rigide) pour jouer ce rôle.

On observe alors aux endroits critiques de l'embase de connexion 104a du palier magnétique chemisé la présence d'un coté d'une pression de l'ordre de un Bar et de l'autre coté la présence d'huile sous pression. Compte tenu du taux de fuite standard des traversées (1E-6 mbar.l/s sous 1 bar d'hélium), cela représente une herméticité parfaite au liquide et il n'est alors nul besoin de recourir à des fabrications spécifiques pour obtenir des taux de fuite meilleurs.

De même, l'herméticité 114a de la traversée du connecteur 114 équipant le conduit flexible 112 n'est plus fonctionnelle en opération normale et n'est qu'une aide à l'assemblage pour éviter que le liquide ne coule au moment du montage.

La pression dans l'espace 124 entre les traversées 104a et 114a étant sensiblement égale à la pression intérieure régnant dans la machine, il n'existe qu'une différence de pression négligeable autour du joint d'étanchéité 122 rendant la migration de gaz tout aussi négligeable avec des taux de fuites « standards ».

Dans un autre exemple de réalisation non représenté, la traversée 104a est simplement percée. Bien entendu, cela nécessite de ne remplir de liquide le conduit 112 qu'après la connexion des éléments 104 et 114 via l'orifice de remplissage 128.

De préférence, le conduit 112 est symétrique et la traversée hermétique 116a installée sur la plaque 118 de fermeture de la machine est similaire à la traversée hermétique 114a. On pourra noter que lorsqu'il est prévu un ballon de compensation de pression, le conduit 112 peut alors être moins souple jusqu'à être rigide, un même ballon pouvant servir à équilibrer la pression de plusieurs conduits.

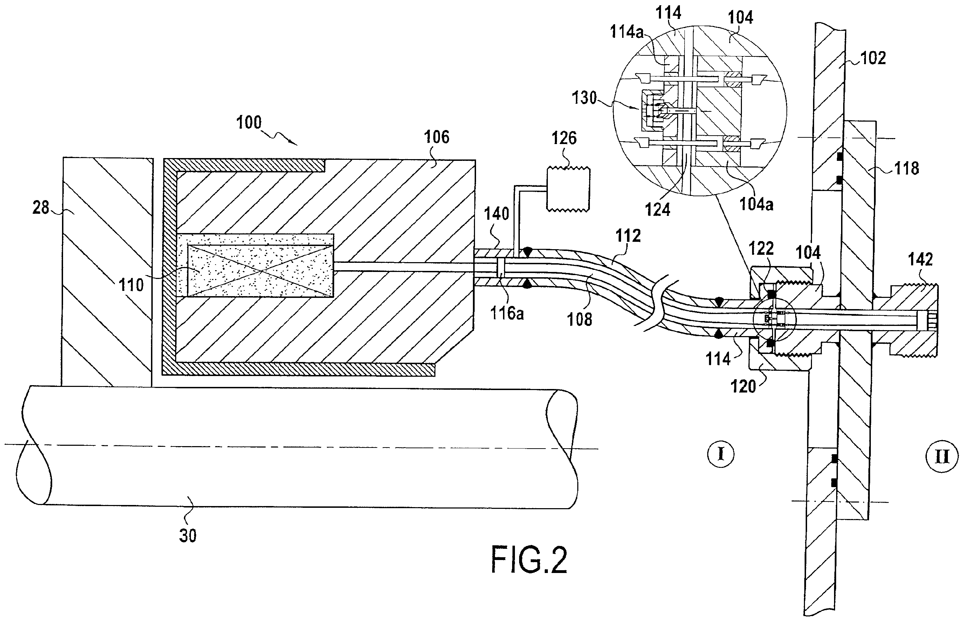

La figure 2 illustre un second exemple, conforme à l'invention, de l'amenée à l'extérieur de la liaison électrique d'un palier magnétique chemisé 100 placé à l'intérieur d'une machine 102 contenant du gaz sous pression.

Dans cet exemple, l'embase de connexion 104 équipée d'une traversée hermétique ou étanche 104a n'est plus installée sur l'enceinte de protection métallique 106 mais à l'extrémité opposée du conduit flexible 112 où elle est en prise avec un connecteur 114 équipé également d'une traversée hermétique ou étanche 114a solidaire de la plaque de fermeture de la machine 118 et permettant donc de relier les liaisons électriques 108 à une prise de connexion extérieure 142.

La liaison mécanique entre l'embase de connexion 104 et le connecteur 114 est comme précédemment réalisée par un écrou 120 qui en outre permet la compression d'un joint d'isolation 122 placé à l'interface de ces deux éléments et assurant l'isolation de l'espace 124 compris entre les deux traversées hermétiques 104a et 114a.

Les liaisons électriques 108 nécessaires à l'alimentation des bobinages 110 du palier magnétique chemisé sont quant à eux maintenant sorties dans une partie de liaison ayant la forme d'un court conduit rigide 140 jusqu'à une traversée hermétique au liquide 116a qui assure la liaison avec les liaisons électriques du conduit flexible à l'extrémité duquel ce court conduit rigide est solidarisé.

Ainsi, la traversée hermétique 116a n'étant plus fonctionnelle en opération normale, on observe alors la présence du coté de l'ensemble chemisé une pression de l'ordre de un Bar et de l'autre coté la présence d'huile sous pression. Compte tenu du taux de fuite standard des traversées (1E-6 mbar.l/s sous 1 bar d'hélium), cela représente une herméticité parfaite au liquide et il n'est alors nul besoin de recourir à des fabrications spécifiques pour obtenir des taux de fuite meilleurs.

Le conduit flexible 112 est rempli d'huile ou tout autre liquide avant assemblage. Une fois l'assemblage effectué la pression interne du conduit est alors très peu différente de la pression de gaz régnant dans la machine, le conduit étant suffisamment flexible pour être compatible avec l'expansion thermique du liquide. De préférence, un ballon de compensation de pression 126 est également présent mais il est maintenant installé sur le court conduit rigide 140 qu'il traverse en aval de la traversée hermétique 116a pour venir en communication avec l'intérieur du conduit flexible 112.

Du fait de la présence de la valve 130, la traversée 114a est rendue perméable au liquide circulant dans le conduit flexible 112 de sorte que le liquide remplit l'espace libre 124 présent entre les traversées 104a et 114a.

La pression du liquide étant très sensiblement égale à la pression du gaz à l'intérieur de la machine grâce à la flexibilité du conduit 112 et/ou du ballon de compensation de pression 126, le joint d'étanchéité 122 voit d'un coté du gaz, de l'autre coté du liquide avec une différence de pression très faible n'autorisant pas le gaz à migrer dans l'espace libre 124.

D'autre part, la pression de part et d'autre de la traversée 104a est d'un côté une haute pression de liquide venant du conduit flexible 112, de l'autre côté la pression atmosphérique venant de l'extérieur, typiquement égale à 1bar. Une traversée de fabrication standard (taux de fuite sous hélium de 1E-6 mbar.l/s) est donc complètement hermétique au liquide et aucune migration n'est à craindre vers l'extérieur.

## Revendications

1. Machine tournante pressurisée comportant un ensemble chemisé dont les liaisons électriques (108) sont reliées à l'extérieur de ladite machine par un conduit d'alimentation électrique (112), le passage desdites liaisons électriques dudit ensemble chemisé vers ledit conduit d'alimentation électrique étant effectué en traversant successivement une première traversée hermétique (104a) montée sur une partie de connexion (104) solidaire dudit ensemble chemisé et une deuxième traversée hermétique (114a) montée sur une partie de connexion (114) solidaire d'une extrémité dudit conduit d'alimentation électrique, lesdites première et deuxième traversées hermétiques coopérant mutuellement et le passage desdites liaisons électriques vers l'extérieur de ladite machine depuis ledit conduit d'alimentation électrique s'effectuant en traversant une troisième traversée hermétique (116a) montée sur une partie de connexion (116) solidaire d'une autre extrémité dudit conduit d'alimentation électrique, **caractérisée en ce qu'**aucune desdites traversées hermétiques permettant le passage desdites liaisons électriques n'est exposée à un gaz sous pression.

2. Machine tournante pressurisée comportant un ensemble chemisé dont les liaisons électriques (108) sont reliées à l'extérieur de ladite machine par un conduit d'alimentation électrique (112), le passage desdites liaisons électriques dudit conduit d'alimentation électrique vers l'extérieur étant effectué en traversant successivement une deuxième traversée hermétique (114a) montée sur une partie de connexion (114) solidaire d'une extrémité dudit conduit d'alimentation électrique et une première traversée hermétique (104a) montée sur une partie de connexion (104) solidaire d'une plaque de fermeture (118) de ladite machine, lesdites première et deuxième traversées hermétiques coopérant mutuellement et le passage desdites liaisons électriques dudit ensemble chemisé vers ledit conduit d'alimentation électrique s'effectuant en traversant une troisième traversée hermétique (116a) montée sur une partie de liaison (140) solidaire à une extrémité d'une autre extrémité dudit conduit d'alimentation électrique et à une autre extrémité dudit ensemble chemisé, **caractérisée en ce qu'**aucune desdites traversées hermétiques permettant le passage desdites liaisons électriques n'est exposée à un gaz sous pression.

3. Machine selon la revendication 1 ou la revendication 2, **caractérisée en ce que** ledit conduit d'alimentation électrique est un conduit flexible.

4. Machine selon la revendication 1 ou la revendication 2, **caractérisée en ce que** ledit conduit d'alimentation électrique est un conduit rigide.

5. Machine selon l'une quelconque des revendications 1 à 4, **caractérisée en ce que** ledit conduit d'alimentation est rempli d'un liquide de remplissage pour maintenir une pression interne au dit conduit d'alimentation électrique identique à la pression interne à la machine.

6. Machine selon la revendication 5, **caractérisée en ce qu'**elle comporte en outre un ballon de compensation de pression (126) pour maintenir une pression interne au dit conduit d'alimentation électrique identique à la pression interne à la machine.

7. Machine selon la revendication 5, **caractérisée en ce que** ledit liquide de remplissage est un isolant diélectrique.

8. Machine selon la revendication 5, **caractérisée en ce qu'**une valve (130) est placée ou un perçage aménagé au travers de ladite deuxième traversée hermétique afin que la pression externe appliquée à ladite première traversée hermétique soit créée par ledit liquide de remplissage.

9. Machine selon l'une quelconque des revendications 1 à 8, **caractérisée en ce que** ledit ensemble chemisé est un palier magnétique chemisé.

10. Machine selon l'une quelconque des revendications 1 à 8, **caractérisée en ce que** ledit ensemble chemisé est un détecteur chemisé pour palier magnétique.

11. Machine selon l'une quelconque des revendications 1 à 8, **caractérisée en ce que** ledit ensemble chemisé est un moteur électrique chemisé.

12. Machine selon l'une quelconque des revendications 1 à 11, **caractérisée en ce que** le milieu extérieur à la machine est liquide.

## Patentansprüche

1. Druckbeaufschlagte drehende Maschine, die eine ummantelte Einheit aufweist, deren elektrische Verbindungen (108) mit der Außenseite der Maschine über eine elektrische Versorgungsleitung (112) verbunden sind, wobei der Übergang der elektrischen Verbindungen von der ummantelten Einheit zur elektrischen Versorgungsleitung durch aufeinanderfolgendes Durchqueren einer ersten hermetisch dichten Durchführung (104a), die auf einen fest mit der ummantelten Einheit verbundenen Anschlussteil (104) montiert ist, und einer zweiten hermetisch dichten Durchführung (114a) erfolgt, die auf einen mit einem Ende der elektrischen Versorgungsleitung fest verbundenen Anschlussteil (114) montiert ist, wobei die erste und die zweite hermetisch dichten Durchführungen zusammenwirken, und der Übergang der elektrischen Verbindungen nach außerhalb der Maschine ausgehend von der elektrischen Versorgungsleitung erfolgt, indem eine dritte hermetisch dichte Durchführung (116a) durchquert wird, die auf einen Anschlussteil (116) montiert ist, der fest mit einem anderen Ende der elektrischen Versorgungsleitung verbunden ist, **dadurch gekennzeichnet, dass** keine der den Durchgang der elektrische Verbindungen erlaubenden hermetisch dichten Durchführungen einem Druckgas ausgesetzt ist.

2. Druckbeaufschlagte drehende Maschine, die eine ummantelte Einheit aufweist, deren elektrische Verbindungen (108) mit der Außenseite der Maschine über eine elektrische Versorgungsleitung (112) verbunden sind, wobei der Übergang der elektrischen Verbindungen von der elektrischen Versorgungsleitung nach außen durch aufeinanderfolgendes Durchqueren einer zweiten hermetisch dichten Durchführung (114a), die auf einen mit einem Ende der elektrischen Versorgungsleitung fest verbundenen Anschlussteil (114) montiert ist, und einer ersten hermetisch dichten Durchführung (104a) erfolgt, die auf einen fest mit einer Verschlussplatte (118) der Maschine verbundenen Anschlussteil (104) montiert ist, wobei die erste und die zweite hermetisch dichten Durchführungen zusammenwirken, und der Übergang der elektrischen Verbindungen von der ummantelten Einheit zur elektrischen Versorgungsleitung erfolgt, indem eine dritte hermetisch dichte Durchführung (116a) durchquert wird, die auf einen Verbindungsteil (140) montiert ist, der an einem Ende mit einem anderen Ende der elektrischen Versorgungsleitung und an einem anderen Ende mit der ummantelten Einheit fest verbunden ist, **dadurch gekennzeichnet, dass** keine der den Durchgang der elektrische Verbindungen erlaubenden hermetisch dichten Durchführungen einem Druckgas ausgesetzt ist.

3. Maschine nach Anspruch 1 oder Anspruch 2, **dadurch gekennzeichnet, dass** die elektrische Versorgungsleitung ein Schlauch ist.

4. Maschine nach Anspruch 1 oder Anspruch 2, **dadurch gekennzeichnet, dass** die elektrische Versorgungsleitung ein Rohr ist.

5. Maschine nach einem der Ansprüche 1 bis 4, **dadurch gekennzeichnet, dass** die Versorgungsleitung mit einer Füllflüssigkeit gefüllt ist, um einen Innendruck der elektrischen Versorgungsleitung gleich dem Innendruck der Maschine zu halten.

6. Maschine nach Anspruch 5, **dadurch gekennzeichnet, dass** sie außerdem einen Druckausgleichsballon (126) aufweist, um einen Innendruck der elektrischen Versorgungsleitung gleich dem Innendruck der Maschine zu halten.

7. Maschine nach Anspruch 5, **dadurch gekennzeichnet, dass** die Füllflüssigkeit ein dielektrischer Isolator ist.

8. Maschine nach Anspruch 5, **dadurch gekennzeichnet, dass** ein Ventil (130) platziert oder eine Bohrung durch die zweite hermetisch dichte Durchführung ausgespart ist, damit der auf die erste hermetisch dichte Durchführung angewendete Außendruck durch die Füllflüssigkeit erzeugt wird.

9. Maschine nach einem der Ansprüche 1 bis 8, **dadurch gekennzeichnet, dass** die ummantelte Einheit ein ummanteltes Magnetlager ist.

10. Maschine nach einem der Ansprüche 1 bis 8, **dadurch gekennzeichnet, dass** die ummantelte Einheit ein ummantelter Detektor für ein Magnetlager ist.

11. Maschine nach einem der Ansprüche 1 bis 8, **dadurch gekennzeichnet, dass** die ummantelte Einheit ein ummantelter Elektromotor ist.

12. Maschine nach einem der Ansprüche 1 bis 11, **dadurch gekennzeichnet, dass** das Milieu außerhalb der Maschine flüssig ist.

## Claims

1. Pressurized rotary machine comprising a canned or sleeved assembly of which the electrical connections (108) are connected to the outside of the said machine by an electric supply duct (112), the said electrical connections passing from the said canned or sleeved assembly to the said electric supply duct by passing in succession through a first hermetically sealed bushing (104a) mounted on a connection part (104) secured to the said canned or sleeved assembly and a second hermetically sealed bushing (114a) mounted on a connection part (114) secured to one end of the said electric supply duct, the said first and second hermetically sealed bushings collaborating with one another and the said electrical connections passing to the outside of the said machine from the said electric supply duct by passing through a third hermetically sealed bushing (116a) mounted on a connection part (116) secured to another end of the said electric supply duct, **characterized in that** none of the said hermetically sealed bushings through which the said electrical connections pass is exposed to a pressurized gas.

2. Pressurized rotary machine comprising a canned or sleeved assembly of which the electrical connections (108) are connected to the outside of the said machine by an electric supply duct (112), the said electrical connections passing from the said electric supply duct to the outside by passing in succession through a second hermetically sealed bushing (114a) mounted on a connection part (114) secured to one end of the said electric supply duct and a first hermetically sealed bushing (104a) mounted on a connection part (104) secured to a cover plate (118) of the said machine, the said first and second hermetically sealed bushings collaborating with one another and the said electrical connections passing from the said canned or sleeved assembly to the said electric supply duct by passing through a third hermetically sealed bushing (116a) mounted on a joining part (140) secured at one end to another end of the said electric supply duct and at another end to the said canned or sleeved assembly, **characterized in that** none of the said hermetically sealed bushings through which the said electrical connections pass is exposed to a pressurized gas.

3. Machine according to Claim 1 or Claim 2, **characterized in that** the said electric supply duct is a flexible duct.

4. Machine according to Claim 1 or Claim 2, **characterized in that** the said electric supply duct is a rigid duct.

5. Machine according to any one of Claims 1 to 4, **characterized in that** the said supply duct is filled with a liquid filler so as to keep the internal pressure inside the said electric supply duct identical to the internal pressure inside the machine.

6. Machine according to Claim 5, **characterized in that** it further comprises a pressure compensating balloon (126) to keep the internal pressure inside the said electric supply duct identical to the internal pressure inside the machine.

7. Machine according to Claim 5, **characterized in that** the said liquid filler is a dielectric insulator.

8. Machine according to Claim 5, **characterized in that** a valve (130) is positioned or a drilling created across the said second hermetically sealed bushing so that the external pressure applied to the said first hermetically sealed bushing is created by the said liquid filler.

9. Machine according to any one of Claims 1 to 8, **characterized in that** the said canned or sleeved assembly is a sleeved magnetic bearing.

10. Machine according to any one of Claims 1 to 8, **characterized in that** the said canned or sleeved assembly is a sleeved detector for a magnetic bearing.

11. Machine according to any one of Claims 1 to 8, **characterized in that** the said canned or sleeved assembly is a canned electric motor.

12. Machine according to any one of Claims 1 to 11, **characterized in that** the medium external to the machine is liquid.
